# EUROPEAN PATENT SPECIFICATION

(11) **EP 2 135 022 B1**
(45) Date of publication and mention of the grant of the patent: **21.11.2018**
(21) Application number: 07848650.3
(22) Date of filing: 20.12.2007
(51) Int. Cl.: F25D 31/00, B67D 1/08

(54) **A MOTOR PROTECTION DEVICE**
MOTORSCHUTZVORRICHTUNG
DISPOSITIF DE PROTECTION DE MOTEUR

(30) Priority: 05.04.2007 GB 0706747
(43) Date of publication of application: 23.12.2009
(73) Proprietor: Xylem IP UK Sàrl, 1259 Senningerberg (LU)
(72) Inventor: WYATT, Gary, David, Worcester, Wordestershire WR14 1LT (GB)
(74) Representative: Anderson, James Edward George
(86) International application number: PCT/GB2007/004921
(87) International publication number: WO 2008/122747

(56) References cited:
- EP-A- 0 866 028
- EP-A- 0 919 518
- EP-A- 1 055 889
- BE-A- 506 758
- FR-A- 1 297 239
- GB-A- 2 213 246
- GB-A- 2 307 975
- US-A- 4 124 994

## Description

The present invention relates to a beverage cooling system comprising a motor protection device.

It is known to provide a beverage cooling system that comprises a reservoir of cooling fluid that is pumped through tubes to cool pipework containing a beverage or beverages to be cooled. In such a system a motor assembly is provided comprising a housing containing a motor operative to drive a shaft mounted on bearings in the housing and which extends from the motor. The motor assembly is mounted on top of the reservoir of cooling fluid with the drive shaft submersed in the fluid. The distal end of the shaft may be provided with an agitator for circulating fluid within the reservoir, and/or a submersible pump for circulating cooling fluid through the tubes.

BE506758 discloses a water treatment device for introducing a stream of air into water.

EP1055889 A2 discloses an ice bank chiller comprising a reservoir, a motor and an agitation pump arranged to cause substantial circulation of the reservoir water against ice on cooling coils.

It is desirable to be able to prevent the housing and the associated bearings and motor from becoming damp or wet. However, this is often difficult because of the restricted space in which to fit the motor assembly, and in particular the restricted height available in which to mount the motor assembly on top of the reservoir - for example the assembly and reservoir typically have to fit underneath a bar top or work surface. This can mean that there is a relatively small clearance between the top of the fluid level in the reservoir, and the underside of the housing and lower bearing on which the shaft is mounted. This often leads to the fluid splashing the bearings and motor which can damage the bearings and motor prematurely.

According to a first aspect of the invention, there is provided a beverage cooling system comprising a motor assembly for circulating fluid in the system, the motor assembly comprising a housing containing a motor operative to drive a shaft extending from the housing, the shaft being mounted on bearing means in the housing, a distal end of the shaft being adapted to be submersed in use in a fluid to be circulated, the motor assembly further comprising a motor protection device comprising barrier means provided adjacent the bearing means, and evacuation means arranged to define a cavity between the bearing means and the evacuation means, the evacuation means being operative to create a pressure differential across the evacuation means such that the fluid to be circulated is evacuated from the cavity.

Preferably the evacuation means is operative to evacuate the cavity upon rotation of the shaft within the fluid to be circulated.

Preferably the evacuation means comprises a stator and a rotor, the rotor being operative to spin fluid through a fluid flow path defined between the rotor and stator of the evacuation means.

Preferably the fluid flow path comprises an inlet and an outlet, the outlet being positioned radially outwardly of the inlet.

Preferably, in use, fluid spins through the evacuation means such that centrifugal force acts on the fluid to force the fluid radially outwardly towards the outlet.

Preferably the outlet is spaced further from the bearing means than the inlet. Preferably the stator and rotor of the evacuation means are arranged to define a flow path that is inclined from the longitudinal axis of the shaft.

Preferably the stator and rotor comprise conical portions so arranged to define the flow path therebetween.

Preferably the rotor is fixedly mounted to the shaft so as to rotate, in use, with the shaft.

Preferably the barrier means comprises a hollow tube, one end of which is open to receive the fluid to be circulated, the other end of which abuts the motor housing.

The shaft may be provided with a pump operative to pump the fluid through a circulation system connected to the pump. In this embodiment the tube may comprise a pump column mounting the pump on the housing.

The shaft may be provided with an agitator operative to agitate the fluid within a circulation system.

Other aspects of the present invention may include any combination of the features or limitations referred to herein.

The present invention may be carried into practice in various ways, but embodiments will now be described by way of example only with reference to the accompanying drawings in which:
**Figure 1** is a part sectional side view of a motor assembly in accordance with the present invention showing the assembly mounted on a beverage cooling system;
**Figure 2** is a part sectional side view of a modified motor assembly in accordance with the present invention; and
**Figure 3** is an enlarged sectional side view of part of the assemblies of Figures 1 and 2.

Referring to the Figures, a motor assembly 1 comprises a housing 3 containing an electric motor 5. A drive shaft 7 is driven by the motor 5 and extends from the base 6 of the housing 3. The drive shaft 7 is mounted on bearing means within the housing 3, the bearing means comprising a lower bearing 8 adjacent the base 6 of the housing 3. The motor 5 may be an AC motor powered directly from mains electricity, or could be a DC motor incorporating an AC-DC transformer.

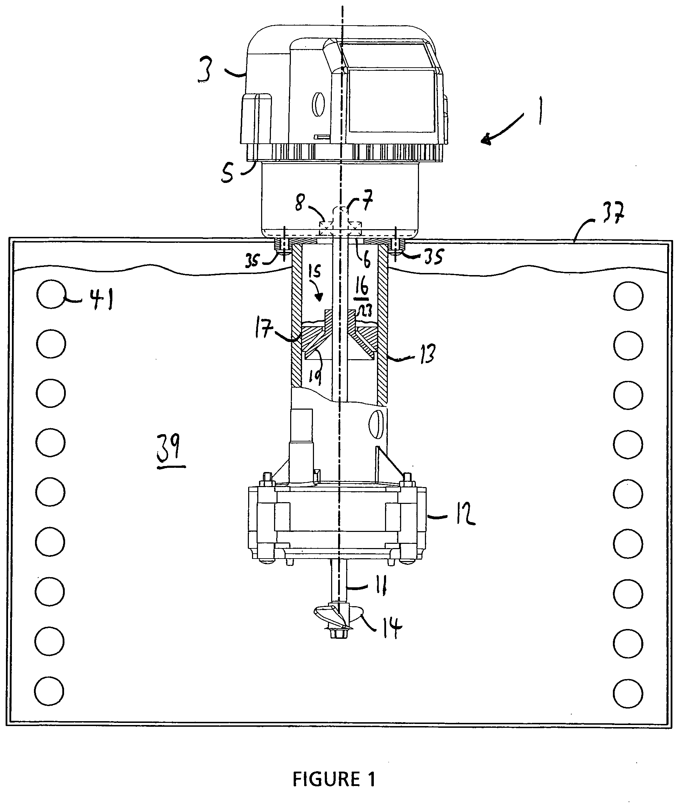

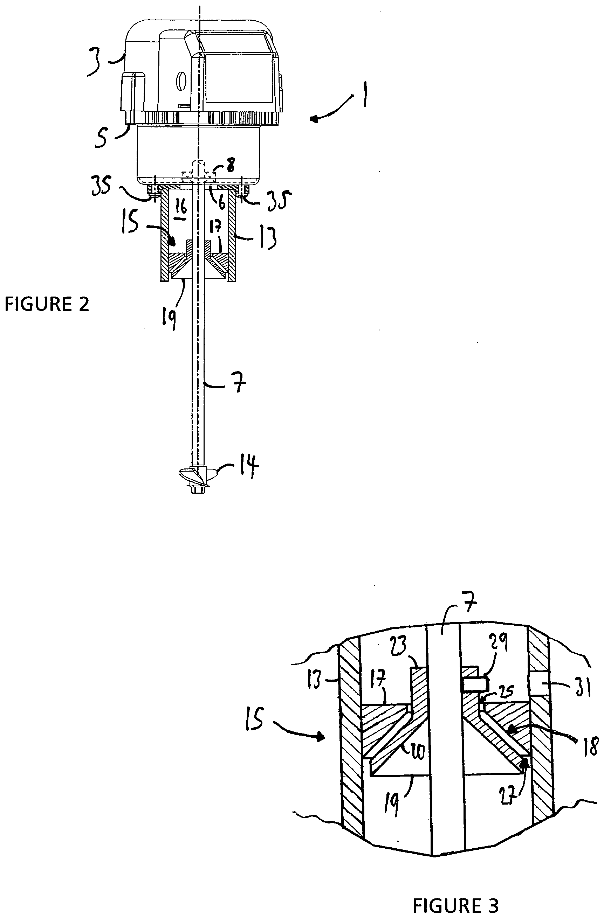

The distal end 11 of the shaft 7 is provided with any desired circulation means which, in the example of Figure 1, comprises a pump 12 for pumping a fluid, and an agitator 14 for agitating a fluid to ensure that the fluid does not freeze. The example of Figure 2 comprises only the agitator 14. The inlet to the pump 12, in this example, is formed as an opening at the base of the pump 12.

The assembly 1 further comprises a motor protection device comprising barrier means in the form of a hollow cylindrical tube 13 that extends down from the base 6 of the housing 3 concentrically with the shaft 7. The tube 13 can be formed from any suitable material which may be a plastics material, although in this example the tube 13 comprises a pump column that mounts the pump 12 on to the base 6 of housing 3.

The motor protection device additionally comprises evacuation means 15 spaced from the base 6 of the housing 3, part way along the shaft 7 and tube 13 so as to define a cavity 16 between the evacuation means 15 and the base 6 of the housing 3. The evacuation means 15 comprises a stator 17 fixedly mounted to the inside of the cylinder 13, and a rotor 19 fixedly attached to the shaft 7 to rotate with the shaft 7.

The stator 17 is in the form of a cylindrical block, the underside of which comprises a conical cut-out 18. The shaft 7 passes through the centre of the block and there is a gap between the block and the shaft 7

The rotor 19 comprises a conical lower portion 20, the top of which, in this example, comprises a cylindrical boss 23 dimensioned to be received within the gap between the stator block and the shaft 7, the shaft 7 passing through the centre of the boss 23. The boss 23 is dimensioned such that there is a clearance 25 between the outside of the boss 23 and the inside of the stator block, the clearance 25 functioning as a fluid inlet in use of the device 1. The boss 23 may be omitted in a modified embodiment.

The outer surface of the lower conical portion 20 of the rotor 19 is at the same angle as that of the inner surface of the conical cut-out 18 of the stator 17 such that these surfaces are parallel but spaced apart to define a fluid flow path 26 therebetween. The space between the lower margin of the stator 17 and the lower margin of the conical portion 20 of the rotor 19 functions as an outlet 27.

The rotor 19 is fixed to the shaft 7 by any suitable fixing means which, in this example, comprises a grub screw 29 that is threaded through the boss 23 to clampingly engage the shaft 7. In this example, an access bore 31 is provided through the wall of the cylinder 13 to provide access to the grub screw 29. Any other suitable fixing means may alternatively or additionally be provided. For example, the rotor 19 may simply be slid onto elongate lugs formed on the outside of the shaft 7.

The base 6 of the housing 3 is bolted 35 onto the top of a beverage cooling system comprising reservoir 37 containing a fluid 39 that is cooled by a refrigeration coil 41 as is well known. The pump 12 is connected to tubing (not shown) to circulate cooled fluid through the tubing to cool separate pipework containing a beverage to be cooled. The agitator 14 is operative to prevent the cooled fluid adjacent the pump 12 and agitator 14 from completely freezing.

In use of the device 1, the shaft 7 is submersed in the fluid 39. When the device 1 is switched off the fluid level in the tube 13 is the same as the fluid level outside of the tube 13 and is thus relatively close to the base 6 of the housing 3 and the associated bearing 8 on which the shaft 7 is mounted. The fluid level is also relatively close to the underside of the motor 5 within the housing 3.

When the motor 5 is switched on, the shaft 7 rotates to drive the pump 12 and agitator 14 mounted on the end of the shaft 7. The rotor 19 also rotates with the shaft 7 and this serves, through interaction between the fluid 39 in the fluid flow path 26 and the outer surface of the lower conical portion 20 of the rotor 19, to spin the fluid within the flow path 26. This spinning of the fluid 39 about the axis of the shaft 7 exerts a centrifugal force 39 on that fluid which causes the fluid 39 to move radially outwardly of the shaft 7.

The fluid flow path 26 defined between the stator 17 and the rotor 19 is inclined away from the axis of the shaft 7 so that the outlet 27 is spaced radially outwardly of the inlet 25. Thus the fluid 39 moves radially outwardly along the fluid flow path 26 under the influence of the centrifugal force and subsequently exits the flow path 26, and thus the cavity 18, through the outlet 27. Atmospheric pressure acts on the fluid 39 remaining in the cavity 18 to force more of that fluid 39 into the fluid flow path 26 where it spins around, and exits, the fluid flow path 26. Thus a pressure differential is generated across the evacuation means 15, such that the inlet 25 is subject to atmospheric pressure whilst the outlet 27 is subject to sub-atmospheric pressure. This therefore serves to evacuate the majority of fluid 39 from the cavity 18 between the evacuation means 15 and the base 6 of the housing 3. Thus splashing of the bearing 8 and motor 5 with fluid is minimised or alleviated altogether.

The evacuation means 15 uses minimal energy and does not adversely affect the performance of the motor 5.

The evacuation means 15 could alternatively comprise an impellor to replace the rotor 19, or the rotor 19 could be formed with blades to propel the fluid 39 along the flow path 26. The rotor 19 could alternatively comprise a flat disc, the fluid flow path being defined radially outwardly across the upper flat surface and down the outer side margin of the disc.

## Claims

1. A beverage cooling system comprising a motor assembly (1) for circulating fluid in the system, the motor assembly comprising a housing (3) containing a motor (5) operative to drive a shaft (7) extending from the housing (3), the shaft (7) being mounted on bearing means (8) in the housing (3), a distal end of the shaft (7) being adapted to be submersed in use in a fluid to be circulated, wherein the beverage cooling system is **characterised in that** the motor assembly (1) further comprises a motor protection device comprising barrier means (13) provided adjacent the bearing means (8), and evacuation means (15) arranged to define a cavity (16) between the bearing means (8) and the evacuation means (15), wherein the evacuation means (15) is operative to create a pressure differential across the evacuation means (15) such that the fluid to be circulated is evacuated from the cavity (16) .

2. The system of claim 1 wherein the evacuation means (15) is operative to evacuate the cavity (16) upon rotation of the shaft (7) within the fluid to be circulated.

3. The system of claim 1 or claim 2 wherein the evacuation means (15) comprises a stator (17) and a rotor (19), the rotor (19) being operative to spin fluid through a fluid flow path defined between the rotor (19) and stator (17) of the evacuation means.

4. The system of claim 3 wherein the fluid flow path comprises an inlet (25) and an outlet (27), the outlet (27) being positioned radially outwardly of the inlet (25).

5. The system of claim 4 wherein, in use, fluid spins through the evacuation means (15) such that centrifugal force acts on the fluid to force the fluid radially outwardly towards the outlet (27).

6. The system of claim 4 or claim 5 wherein the outlet (27) is spaced further from the bearing means (8) than the inlet (25) .

7. The system of any one of claims 3 to 6 wherein the stator (17) and rotor (19) of the evacuation means (15) are arranged to define a flow path that is inclined from the longitudinal axis of the shaft (7).

8. The system of any one of claims 3 to 7 wherein the stator (17) and rotor (19) comprise conical portions (18, 20) so arranged to define the flow path therebetween.

9. The system of any one of claims 3 to 8 wherein the rotor (19) is fixedly mounted to the shaft (7) so as to rotate, in use, with the shaft (7) .

10. The system of any one of the preceding claims wherein the barrier means (13) comprises a hollow tube, one end of which is open to receive the fluid to be circulated, the other end of which abuts the motor housing (3) .

11. The system of any one of the preceding claims wherein the shaft (7) is provided with a pump operative to pump the fluid through a circulation system connected to the pump.

12. The system of any one of the preceding claims wherein the shaft (7) is provided with an agitator (14) operative to agitate the fluid within a circulation system.

## Patentansprüche

1. Getränkekühlsystem, das eine Motorbaugruppe (1) zum Umwälzen von Fluid in dem System umfasst, wobei die Motorbaugruppe ein Gehäuse (3) umfasst, das einen Motor (5) enthält, der bewirkt, dass eine Welle (7) angetrieben wird, die sich von dem Gehäuse (3) erstreckt, wobei die Welle (7) auf einem Lagermittel (8) in dem Gehäuse (3) montiert wird, wobei ein distales Ende der Welle (7) angepasst wird, im Einsatz in ein umzuwälzendes Fluid eingetaucht zu werden, wobei das Getränkekühlsystem **dadurch gekennzeichnet ist, dass** die Motorbaugruppe (1) des Weiteren eine Motorschutzvorrichtung, die ein benachbart zu dem Lagermittel (8) bereitgestelltes Absperrmittel (13) umfasst, und ein Entleerungsmittel (15) umfasst, das angeordnet wird, einen Hohlraum (16) zwischen dem Lagermittel (8) und dem Entleerungsmittel (15) zu definieren, wobei das Entleerungsmittel (15) bewirkt, eine Druckdifferenz über dem Entleerungsmittel (15) zu erzeugen, sodass das umzuwälzende Fluid aus dem Hohlraum (16) entleert wird.

2. System nach Anspruch 1, wobei das Entleerungsmittel (15) bewirkt, den Hohlraum (16) bei Drehung der Welle (7) innerhalb des umzuwälzenden Fluids zu entleeren.

3. System nach Anspruch 1 oder Anspruch 2, wobei das Entleerungsmittel (15) einen Stator (17) und einen Rotor (19) umfasst, wobei der Rotor (19) bewirkt, Fluid durch einen Fluidströmungsweg zu schleudern, der zwischen dem Rotor (19) und Stator (17) des Entleerungsmittels definiert wird.

4. System nach Anspruch 3, wobei der Fluidströmungsweg einen Einlass (25) und einen Auslass (27) umfasst, wobei der Auslass (27) von dem Einlass (25) radial nach außen positioniert wird.

5. System nach Anspruch 4, wobei im Einsatz Fluid so durch das Entleerungsmittel (15) schleudert, dass eine Fliehkraft auf das Fluid wirkt, um das Fluid radial nach außen in Richtung des Auslasses (27) zu drücken.

6. System nach Anspruch 4 oder Anspruch 5, wobei der Auslass (27) von dem Lagermittel (8) weiter entfernt ist als der Einlass (25).

7. System nach einem der Ansprüche 3 bis 6, wobei der Stator (17) und Rotor (19) des Entleerungsmittels (15) angeordnet werden, einen Strömungsweg zu definieren, der von der Längsachse der Welle (7) geneigt wird.

8. System nach einem der Ansprüche 3 bis 7, wobei der Stator (17) und Rotor (19) konische Abschnitte (18, 20) umfassen, die so angeordnet werden, dass sie den Strömungsweg dazwischen definieren.

9. System nach einem der Ansprüche 3 bis 8, wobei der Rotor (19) mit der Welle (7) fest montiert wird, um im Einsatz mit der Welle (7) zu drehen.

10. System nach einem der vorhergehenden Ansprüche, wobei das Absperrmittel (13) ein hohles Rohr umfasst, wobei ein Ende davon offen ist, das umzuwälzende Fluid aufzunehmen, das andere Ende davon an das Motorgehäuse (3) anstößt.

11. System nach einem der vorhergehenden Ansprüche, wobei die Welle (7) mit einer Pumpe bereitgestellt wird, die bewirkt, das Fluid durch ein mit der Pumpe verbundenes Umlaufsystem zu pumpen.

12. System nach einem der vorhergehenden Ansprüche, wobei die Welle (7) mit einem Rührwerk (14) bereitgestellt wird, das bewirkt, das Fluid innerhalb eines Umlaufsystems aufzurühren.

## Revendications

1. Système de refroidissement d'une boisson comprenant un ensemble moteur (1) pour la circulation du fluide dans le système, l'ensemble moteur comprenant un boîtier (3) contenant un moteur (5) assurant l'entraînement d'un arbre (7) s'étendant depuis le boîtier (3), l'arbre (7) étant monté sur des paliers (8) dans le boîtier (3), une extrémité distale de l'arbre (7) étant adaptée pour être immergée en cours d'usage dans un fluide devant être circulé, le système de refroidissement de la boisson étant **caractérisé en ce que** l'ensemble moteur (1) comprend en outre un dispositif de protection du moteur comprenant un dispositif de barrière (13) pratiqué dans une position adjacente au palier (8), et le dispositif d'évacuation (15) étant agencé pour définir une cavité (16) entre le palier (8) et le dispositif d'évacuation (15), le dispositif d'évacuation (15) assurant la création d'un différentiel de pression dans le dispositif d'évacuation (15), de sorte que le fluide devant être circulé soit évacué hors de la cavité (16).

2. Système selon la revendication 1, le dispositif d'évacuation (15) assurant l'évacuation de la cavité (16) lors de la rotation de l'arbre (7) au sein du fluide devant être circulé.

3. Système selon la revendication 1 ou la revendication 2, le dispositif d'évacuation (15) comprenant un stator (17) et un rotor (19), le rotor (19) assurant la rotation du fluide à travers un chemin d'écoulement du fluide défini entre le rotor (19) et le stator (17) du dispositif d'évacuation.

4. Système selon la revendication 3, le chemin d'écoulement du fluide comprenant une entrée (25) et une sortie (27), la sortie (27) étant positionnée radialement vers l'extérieur de l'entrée (25).

5. Système selon la revendication 4, dans lequel, en cours d'usage, le fluide tourne à travers le dispositif d'évacuation (15) de sorte que la force centrifuge agisse sur le fluide pour le forcer radialement vers l'extérieur, en direction de la sortie (27).

6. Système selon la revendication 4 ou la revendication 5, dans lequel la sortie (27) est plus éloignée du palier (8) que l'entrée (25).

7. Système selon une quelconque des revendications 3 à 6, le stator (17) et le rotor (19) du dispositif d'évacuation (15) étant agencés de façon à définir un chemin d'écoulement incliné par rapport à l'axe longitudinal de l'arbre (7).

8. Système selon une quelconque des revendications 3 à 7, le stator (17) et le rotor (19) comprenant des parties coniques (18, 20) agencées de façon à définir le chemin d'écoulement entre elles.

9. Système selon une quelconque des revendications 3 à 8, le rotor (19) étant monté fixement sur l'arbre (7) de façon à tourner, en cours d'usage, avec l'arbre (7).

10. Système selon une quelconque des revendications précédentes, le dispositif de barrière (13) comprenant un tube creux, dont un bout est ouvert pour recevoir le fluide devant être circulé, et l'autre bout est contigu au boîtier (3) du moteur.

11. Système selon une quelconque des revendications précédentes, l'arbre (7) étant muni d'une pompe assurant le pompage du fluide dans un système de circulation raccordé à la pompe.

12. Système selon une quelconque des revendications précédentes, l'arbre (7) étant muni d'un agitateur (14) assurant l'agitation du fluide dans un système de circulation.
